# FASCICULE DE BREVET EUROPEEN

(11) **EP 1 119 828 B1**
(45) Date de publication et mention de la délivrance du brevet: **28.08.2002**
(21) Numéro de dépôt: 99947559.3
(22) Date de dépôt: 13.10.1999
(51) Int. Cl.: G07F 7/10

(54) **PROCEDE D'ECHANGE DE DONNEES ENTRE UN AUTOMATE ET UNE CARTE A MICROCIRCUIT**
VERFAHREN ZUM DATENAUSTAUSCH ZWISCHEN EINEM AUTOMAT UND EINER CHIPKARTE
METHOD FOR EXCHANGING DATA BETWEEN AN AUTOMATIC DISPENSER AND A MICROCIRCUIT CARD

(30) Priorité: 13.10.1998 FR 9812770
(43) Date de publication de la demande: 01.08.2001
(73) Titulaire: Regie Autonome des Transports Parisiens RATP, 75012 Paris (FR)
(72) Inventeur: GRIEU, François, 75001 Paris (FR); MARDINIAN, Grégory, F-95160 Montmorency (FR)
(74) Mandataire: Dupuis-Latour, Dominique
(86) Numéro de dépôt international: FR9902470
(87) Numéro de publication internationale: WO00022583

(56) Documents cités:
- EP-A- 0 482 975
- EP-A- 0 563 997
- EP-A- 0 831 433
- FR-A- 2 689 662
- FR-A- 2 757 978
- US-A- 5 715 431

## Description

La présente invention concerne les systèmes de transaction automatique délivrant un bien ou un service par l'intermédiaire d'un automate échangeant des informations avec un objet portatif débité d'une valeur ou montant donné en contrepartie du bien ou du service délivré.

L'automate peut être un distributeur automatique, par exemple de confiseries ou de boissons, ou un dispositif établissant un service, par exemple un contrôle d'accès matérialisé par l'ouverture d'un portillon pour le passage d'un voyageur dans un système de transport. Par la suite, on parlera de "délivrance d'un bien" pour simplifier, mais l'invention vise bien entendu des applications beaucoup plus larges incluant la délivrance de toutes sortes de services.

De la même façon, on prendra l'exemple, comme objet portatif, d'une carte à microcircuit. Mais l'invention peut également être appliquée à d'autres types d'objets portatifs, tels que carte magnétique ou titre de transport, par exemple sous la forme d'un coupon magnétique ou analogue.

L'utilisation d'une carte à microcircuit est cependant la mise en oeuvre préférentielle compte tenu du très haut degré de sécurité et de fiabilité permis par cette technique.

La délivrance du bien ou du service résulte de la réalisation d'une transaction au cours de laquelle la carte est couplée temporairement à l'automate pour permettre un échange d'informations entre ces deux éléments, le paiement étant, au moins pour partie, réalisé par la modification d'une information stockée dans la mémoire de la carte, représentative de la valeur de cette dernière.

Le couplage entre carte et automate peut être réalisé par divers modes de liaison connus, avec ou sans contact galvanique, mais on verra que l'invention s'applique très avantageusement au couplage du type "sans contact". Dans ce mode de couplage, il existe en effet un risque non négligeable de rupture inattendue de la communication entre carte et automate, par exemple du fait de la sortie de la carte du rayon d'action de l'automate avant la fin du traitement, ou du fait d'une perturbation passagère, par exemple le passage d'une masse métallique à proximité, ou encore lorsque l'utilisateur passe trop rapidement sa carte devant le terminal pour permettre un échange satisfaisant des informations.

L'événement interrompant la transaction peut être aussi bien accidentel que provoqué, par exemple intentionnellement par l'utilisateur afin d'obtenir la délivrance du bien tout en empêchant le débit de sa carte du montant correspondant.

L'un des buts de l'invention est, dans le cadre d'un système de transaction automatique tel qu'exposé ci-dessus, de lier le paiement (c'est-à-dire le débit de la carte) avec la délivrance du bien de manière à préserver aussi bien les intérêts de l'acheteur (utilisateur) que ceux du vendeur (le gestionnaire de l'automate), même si un événement interrompt la transaction ou empêche la réalisation du paiement.

Jusqu'à présent, le problème est habituellement traité de l'une des manières suivantes :
- on l'ignore sur le plan technique, quitte à le traiter par une procédure humaine ;
- on met temporairement la carte à l'abri d'un retrait par l'utilisateur, et l'automate opère le débit si, et seulement si, le bien est délivré (cas par exemple des automates dans lesquels la carte est occultée par un volet ou "avalée" pendant la transaction) ;
- la carte reste accessible à l'acheteur : on évite ainsi un élément mécanique coûteux, qui ralentit la transaction et se révèle en tout état de cause impraticable dans les transactions sans contact. Mais des précautions particulières doivent alors être prises.

La troisième situation, dans laquelle la carte reste physiquement accessible à l'utilisateur, aboutit à l'une ou l'autre des situations suivantes :
- débit opéré postérieurement à la délivrance du bien : l'acheteur peut essayer d'empêcher le débit, par exemple en retirant sa carte immédiatement après la délivrance du bien ou en rendant d'une autre manière le débit impossible (par exemple en isolant par un morceau d'adhésif l'une des plages de contact du microcircuit de la carte) ; cette manière de procéder est acceptable si la délivrance est intrinsèquement étalée dans le temps, par exemple une communication téléphonique, l'intérêt de la fraude étant très limité ; en revanche, elle n'est pas satisfaisante lorsque l'automate distribue un article, ou débloque un portillon.
- débit préalable à la délivrance du bien : il existe alors un risque que l'acheteur soit lésé, du fait de la réalisation du paiement par échange d'informations à travers un canal de communication qui peut être interrompu par extraction ou éloignement de la carte ; en effet, il est possible que la carte soit débitée mais, l'automate n'en ayant pas la confirmation, il ne délivrera pas le bien.

L'invention se place dans le cadre général correspondant à cette dernière situation, c'est-à-dire celle dans laquelle la carte est débitée avant délivrance du bien.

La transaction, dans son aspect le plus général se déroule de la manière suivante :
10) l'automate commande le débit de la carte ;
20) la carte modifie l'information de valeur monétaire (ou une valeur équivalente en "jetons") ;
30) la carte confirme à l'automate la réalisation effective du débit, c'est-à-dire de la modification de la valeur monétaire dans la mémoire ;
40) l'automate délivre le bien.

Comme on le comprend aisément, une interruption de l'échange entre carte et automate intervenant au cours de l'étape 30 lèse l'acheteur.

Pour pallier cet inconvénient, on avait jusqu'à présent recours à diverses pratiques telles que :
- considérer que l'acheteur est fautif s'il retire sa carte pendant la transaction, et peut donc être pénalisé ; en cas de réclamation, on prévoit des procédures d'indemnisation plus ou moins arbitraires ou la création d'un moyen pour savoir a posteriori si la transaction inscrite dans la carte a été effectivement suivie d'effet par l'automate ;
- débiter des petits montants au fur et à mesure de la délivrance du bien à l'acheteur, en considérant que si l'acheteur est lésé, il le sera d'un montant faible et donc acceptable : cette solution convient parfaitement à la délivrance de fluides ou à une communication téléphonique, mais elle est impraticable pour la délivrance d'articles ou l'accès à un réseau de transport ;
- prévoir un système tel que, si la transaction courante est interrompue avec préjudice pour l'acheteur, dans une transaction ultérieure "de reprise" la délivrance du bien pourra avoir lieu sans nouveau paiement, c'est-à-dire sans nouveau débit de la carte.

Cette troisième solution est une pratique connue, utilisée par exemple dans les porte-monnaie électroniques tels que ceux du projet de norme européenne EN 1546.

Dans ces systèmes connus, si le paiement a eu lieu, si l'utilisateur qui n'a pas obtenu une délivrance du bien désiré recommence la transaction sur le même automate, et si cette nouvelle transaction (transaction de reprise) se poursuit à son terme, le bien est délivré moyennant un paiement équitable.

Ces systèmes connus à transaction de reprise ont cependant en commun un inconvénient.

En effet, si la communication entre l'automate et la carte est interrompue pendant l'étape 30 ci-dessus, et que l'acheteur ne rétablit pas la liaison entre sa carte et le même automate, il sera lésé.

En particulier, quand il existe à proximité plusieurs automates délivrant un bien ou service identique (par exemple plusieurs portillons d'accès à un réseau de transport) le client qui, par exemple, passe un peu trop vite sa carte sans contact et constate la non-ouverture du portillon, va souvent tenter sa chance sur le portillon voisin, donc sur un autre automate que celui avec lequel il avait entamé la transaction initiale. Le second automate va le débiter, même si le premier avait déjà opéré un débit, de sorte que l'acheteur sera débité deux fois pour un seul bien ou service délivré (une seule ouverture de portillon).

Il est possible de pallier cet inconvénient en reliant ensemble les automates d'une même zone par un réseau permettant l'échange des informations utiles pour la reprise de la transaction, par exemple un numéro d'identification de la carte, le numéro du dernier automate ayant commandé un débit, le numéro de transaction correspondant pour cet automate, etc., de sorte que la reprise de la transaction soit possible sur l'un quelconque des automates du réseau.

L'utilisation d'un tel réseau présente deux inconvénients, en particulier :
- la nécessité d'un réseau, avec ses contraintes matérielles et logicielles,
- le fait que chaque automate doit interroger le réseau systématiquement avant d'ordonner le débit d'une carte (étape 10 ci-dessus), ce qui ralentit la transaction, ou bien que chaque automate doit stocker localement les informations relatives aux transactions non terminées opérées (au moins récemment) par les autres automates du réseau et rechercher rapidement si la carte qu'il va débiter coïncide avec l'une de ces informations.

La demande FR-A1-2757978, divulgue un procédé d'échange de données entre la mémoire non volatile d'un objet portatif, notamment d'une carte à microcircuit, et un automate auquel la carte est couplée temporairement pour permettre la délivrance d'un bien on d'un service, la carte comportant une information de valeur susceptible d'être débitée par l'automate en contrepartie de ladite délivrance d'un bien ou d'un service, le procédé comprenant des étapes dans lesquelles l'automate commande la modification d'un indicateur de restauration, indiquant qu'une restauration des données doit être effectuée et une valeur indiquant que la phase d'écriture antérieure a été effectuée correctement.

L'invention propose une solution au problème ci-dessus, qui évite ou minimise le recours à un réseau, avec des caractéristiques qui permettent de répondre aux contraintes les plus critiques, telles que celles des transactions par carte sans contact dans le domaine des transports, où chaque transaction :
- doit être rapide (0,1 seconde environ) ;
- est susceptible d'être interrompue sans faute de l'utilisateur (geste trop rapide ou imprécis) ;
- met en jeu plusieurs lignes de péage (plusieurs portillons) entre lesquels l'acheteur peut se déplacer rapidement (1 à 2 secondes pour aller d'un portillon au voisin) ; et
- doit fonctionner de manière satisfaisante en cas de panne d'un quel-conque de ces éléments, en particulier du réseau reliant les automates, si un tel réseau existe.

À cet effet, l'invention propose un procédé d'échange de données entre la mémoire non volatile d'un objet portatif, notamment d'une carte à microcircuit, et un automate auquel la carte est couplée temporairement pour permettre la délivrance d'un bien ou d'un service, la carte comportant une information de valeur susceptible d'être débitée par l'automate en contrepartie de ladite délivrance du bien ou service, caractérisé en ce qu'il comprend des étapes dans lesquelles l'automate commande la modification d'un indicateur de ratification, conservé dans la mémoire non volatile de la carte, entre deux états, à savoir un état ratifié correspondant au cas où la précédente transaction opérée avec la carte, indifféremment avec ledit terminal ou avec un autre, s'est déroulée correctement, et un état non ratifié dans le cas où cette précédente transaction a été interrompue en cours d'exécution, et dans lequel l'automate, successivement : débite con-ditionnellement la carte, si l'indicateur est à l'état ratifié ; commande le positionnement par la carte de l'indicateur à l'état non ratifié si un débit a été opéré à l'étape précédente ; commande ensuite la délivrance du bien ou du service ; et, si le bien est effectivement délivré à l'étape précédente, commande le positionnement par la carte de l'indicateur à l'état ratifié.

Le procédé peut notamment comprendre les étapes suivantes : a) par l'automate, lecture de l'état de l'indicateur de ratification et saut à l'étape (e) si celui-ci est à l'état non ratifié ; b) par l'automate, commande du débit de la carte d'un montant correspondant au bien ou service à délivrer ; c) par la carte, enregistrement du débit par mise à jour de l'information de valeur, et positionnement de l'indicateur à l'état non ratifié ; d) par la carte, confirmation à l'automate de l'enregistrement du débit ; e) par l'automate, délivrance du bien ou service ; f) par l'automate, commande du positionnement de l'indicateur à l'état ratifié ; et g) par la carte, modification de l'état de l'indicateur, pour le mettre à l'état ratifié.

Selon un certain nombre de caractéristiques subsidiaires avantageuses :
- le débit conditionnel de la carte est subordonné en outre à l'écoulement d'un délai depuis la précédente opération de positionnement de l'indicateur à l'état non ratifié et/ou à l'appartenance de l'automate exécutant la transaction courante à un groupe auquel appartient également l'automate ayant réalisé la transaction précédente ;
- lorsque l'indicateur est à l'état non ratifié, la délivrance sans débit est inhibée si l'automate détecte qu'une délivrance a eu lieu lors de la précédente utilisation de la carte ;
- le débit de la carte et le positionnement de l'indicateur à l'état non ratifié sont opérés de manière indivisible ;
- au moins une partie des informations modifiant l'état de la carte, notamment les commandes permettant de positionner l'indicateur à l'état ratifié, et/ou moins une partie des informations relatives à l'état de la carte, en particulier l'état de l'indicateur et la confirmation de la prise en compte du débit, sont préalablement traitées par des moyens cryptographiques conjointement mis en oeuvre par la carte et l'automate ;
- la délivrance du bien ou du service est opérée de manière différée après une temporisation donnée ; on peut avantageusement prévoir alors que le bien soit délivré avant l'expiration de la temporisation en cas de confirmation de la bonne exécution de l'étape de positionnement par la carte de l'indicateur à l'état ratifié et/ou, par ailleurs, en insérant dans la transaction une pause de durée aléatoire ;
- les informations échangées entre l'automate et la carte sont chiffrées d'une manière empêchant de révéler le moment où est commandé par l'automate, et réalisé par la carte, le positionnement de l'indicateur à l'état ratifié ;
- il est prévu un comptage cumulatif, dans l'automate, des occurences de lecture d'un indicateur à l'état non ratifié ;
- il est prévu un comptage cumulatif, dans la carte, des occurences de mémorisation de l'indicateur à l'état non ratifié entre deux transactions, des moyens pouvant notamment être prévus pour signaler le dépassement d'un seuil donné du comptage dans la carte, notamment des moyens pour inhiber la délivrance consécutive du bien ou du service ;
- la mémoire de la carte comporte une information de nature du bien ou service à délivrer, information mise à jour avant délivrance éventuelle de ce bien ou service.

D'autres caractéristiques et avantages ressortiront de la description ci-dessous d'un exemple de mise en oeuvre de l'invention.

### Exemple

On va tout d'abord expliquer la manière dont est constitué un système avec transaction de reprise selon l'art antérieur (proche notamment du projet de norme EN 1546 de porte-monnaie électronique, mais transposable à un grand nombre d'autres applications).

Chaque carte possède dans sa mémoire :
a) un numéro d'identification de carte, invariable et caractéristique,
b) le numéro du dernier automate ayant commandé un débit dans la carte,
c) le numéro de transaction pour cet automate, et
d) la valeur de la carte, c'est-à-dire le montant monétaire ou son équivalent en jetons, qui est la donnée sur laquelle est opérée le débit.

Chaque automate, quant à lui, possède dans. sa mémoire :
A) le numéro de la dernière carte à laquelle il a commandé un débit,
B) un numéro d'identification d'automate invariable et caractéristique,
C) un numéro de transaction, incrémenté par l'automate à chaque transaction.

La transaction comprend essentiellement les étapes suivantes :
05) I'automate lit dans la carte les informations a, b et c et détermine si a = A, b = B et c = C ; dans l'affirmative, il passe directement à l'étape 40.
10) l'automate commande le débit de la carte du montant D correspondant au bien à délivrer, ainsi que l'écriture dans la carte de a = A, b = B et c = C.
20) la carte enregistre le débit, c'est-à-dire remplace d par (d-D) et a, b et c par les valeurs communiquées A, B, C.
30) la carte confirme à l'automate l'enregistrement du débit ;
40) l'automate délivre le bien et remplace C par C+1.

La transaction comporte bien entendu des étapes liées à l'établissement, au déroulement et à la conclusion de la communication entre l'automate et la carte, des étapes assurant la comptabilisation des sommes perçues par l'automate, et des étapes de génération et de vérification de certificat cryptographiques nécessaires pour s'assurer de l'authenticité des valeurs échangées. Ces étapes, en elles-mêmes connues, ne sont pas impliquées, sauf indication contraire, dans la mise en oeuvre de l'invention, et ne seront pas décrites plus en détail.

On prévoit également des étapes permettant de gérer le cas où la valeur de la carte est insuffisante, et un traitement adapté pour arrêter les opérations : par exemple, la valeur de la carte est lue au préalable par l'automate, comparée au montant de la transaction, et l'étape 10 est inhibée en cas de crédit insuffisant ; on peut également prévoir, en variante ou en complément, que la carte effectue ce même contrôle et inhibe les étapes 20 et 30.

Par ailleurs, les diverses opérations effectuées à l'étape 20 sont avantageusement réalisées de manière indivisible, c'est-à-dire que l'on prévoit dans la carte des moyens tels que, si l'étape 20 est interrompue, une lecture ultérieure révélera les informations a, b, c et d soit toutes inchangées, soit toutes changées conformément aux commandes de l'automate, mais en aucune façon seulement certaines d'entre elles auront été modifiées.

Comme on l'a indiqué plus haut, en cas d'interruption de la communication entre l'automate et la carte pendant l'étape 40, si l'utilisateur effectue un réessai sur un automate qui n'est pas le même automate que celui de la transaction initiale interrompue, le second automate va débiter la carte, même si le premier automate l'avait déjà fait. L'acheteur, débité deux fois pour un seul bien délivré, sera donc lésé par la transaction de reprise.

Pour pallier cette difficulté, et offrir un compromis acceptable entre l'assurance que l'acheteur ne sera pas lésé et la possibilité de fraude, l'invention prévoit essentiellement dans la mémoire de la carte un bit 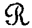 qui sera appelé "bit de ratification", susceptible de prendre les deux états suivants (étant bien entendu qu'il est possible de permuter les rôles joués par les valeurs 0 et 1)

État 0 ("ratifié") : cas normal, la précédente transaction de l'utilisateur s'est bien déroulée, l'automate délivrera ultérieurement le bien en débitant la carte.

État 1 ("non ratifié") : la transaction précédente ne s'est pas terminée correctement (le bien n'a pas été délivré), et le bien devra être délivré ultérieurement sans débit de la carte.

S'il y a lieu de débiter la carte, l'indicateur est positionné à l'état 1 par l'automate avant délivrance du bien, et si le bien est ensuite délivré, l'automate commande le positionnement de 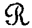 à l'état 0.

Plus précisément, la transaction comprend les étapes suivantes :
05) l'automate lit dans la carte l'état de 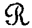 ; si celui-ci est à l'état 1, alors l'automate passe directement à l'étape 40 ;
10) l'automate commande le débit de la carte du montant D correspondant au bien délivré ;
20) la carte enregistre le débit, c'est-à-dire qu'elle remplace le solde d par (d-D) et positionne 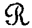 à l'état 1 ;
30) la carte confirme à l'automate l'enregistrement du débit ;
40) l'automate, qui a reçu la confirmation de l'étape 30, ou via le test de l'étape 05, délivre le bien ;
45) l'automate commande le positionnement de 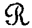 à l'état 0 ;
50) la carte modifie l'état de 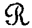 , qui passe à l'état 0.

Comme on peut le constater, le débit est opéré aux étapes 10, 20 et 30.

Dans le cas particulier où l'on débite des unités, on a D = 1, qui peut être dans ce cas implicite ; un autre cas particulier est celui à usage unique, correspondant à d = 1, puis d = 0, d pouvant être réduit à un unique élément binaire.

On remarquera que l'acheteur n'est jamais lésé lorsqu'en l'absence de délivrance du bien il tente la même transaction par réessai sur un autre automate (a fortiori sur le même), et ce de manière caractéristique sans qu'il soit nécessaire d'établir un réseau entre automates.

On va maintenant décrire divers perfectionnements au procédé que l'on vient d'exposer.

Certains de ces perfectionnements visent notamment à réduire la probabilité d'une situation dans laquelle les étapes 05 à 45 se déroulent normalement, mais la transaction est interrompue juste après l'étape 45, empêchant la réalisation de l'étape 50.

Dans ce cas, I'acheteur, à qui l'automate a délivré le bien (étape 40), peut de fait disposer à nouveau du bien par une nouvelle transaction, sans être débité une seconde fois. Il y est donc de son intérêt d'empêcher l'exécution de l'étape 50, par exemple en passant volontairement la carte rapidement auprès de l'automate pour pouvoir interrompre la transaction juste après l'exécution de l'étape 45.

Un *premier perfectionnement* consiste, à l'étape 05, à passer à l'étape 40 (deuxième branche de l'alternative après test de l'état de 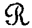 ) seulement si d'autres conditions que 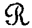 égal 1 sont réunies, telles qu'en particulier le délai écoulé depuis le positionnement de 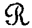 à 1 et/ou l'identité de l'automate ayant auparavant positionné l'indicateur.

Pour cela, on associe à l'indicateur, dans la carte, des informations caractéristiques de l'heure et/ou de la nature de l'automate qui a effectué le débit précédent (et/ou commandé le positionnement de l'indicateur) lors d'une précédente transaction. Ces informations sont avantageusement écrites lors de l'étape 20 (de la même manière qu'à l'étape 20 d'une transaction de l'art antérieur, décrite plus haut).

On compare ces informations mémorisées dans la carte à des informations correspondantes, caractéristiques de l'heure courante et/ou de la nature de l'automate qui s'apprête à délivrer le bien.

A titre d'exemple, dans une application au transport, ce perfectionnement a pour effet de ne permettre la reprise de la transaction avec un avantage indu de l'acheteur que si la précédente opération a commencé à s'exécuter sur la même ligne de péages et dans un délai assez faible pour exclure une réutilisation pour un nouveau trajet. Avec cette précaution, un voyageur ne peut effectuer deux trajets pour le prix d'un, et l'éventuelle ouverture du portillon à un second voyageur (qui présente de nouveau le titre de transport non ratifié du premier voyageur) ne nuit pas davantage au transporteur qu'un franchissement en force du portillon, dans la mesure où de toute façon l'un des deux voyageurs n'est pas en règle en cas de contrôle.

Un *deuxième perfectionnement* consiste, à l'étape 05, à inhiber le passage à l'étape 40 (deuxième branche de l'alternative après test de l'état de 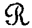 ) si l'automate a précédemment réalisé, pour cette même carte, une transaction qui a été poursuivie jusqu'à la bonne exécution de la délivrance. Ce perfectionnement a pour effet d'obliger en tout état de cause l'acheteur à changer d'automate pour avoir l'espoir d'obtenir une double délivrance.

L'automate procède à cette détection par exemple en consultant un historique des transactions qu'il a réalisées, comportant pour chaque transaction un identificateur de la carte et l'indication si la délivrance a eu lieu ; cet historique peut être partagé entre plusieurs automates, si un réseau de communication les relie (remarque : dans une application au péage la défaillance de ce réseau n'entraîne qu'une légère augmentation de la probabilité qu'un titre de transport soit utilisable sur un second portillon).

L'inhibition du paiement gratuit peut se traduire soit par l'arrêt de la transaction (cas du transport en cas de seconde utilisation dans le délai du premier perfectionnement ci-dessus) soit par une autre délivrance moyennant un nouveau paiement (cas de la délivrance d'un article).

Un *troisième perfectionnement* consiste, à l'étape 20, à effectuer le débit et la modification de l'indicateur 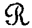 (ainsi que, le cas échéant, l'écriture des informations associées au premier perfectionnement visé plus haut) d'une manière telle que ces opérations soient indivisibles.

En d'autres termes, on prévoit dans la carte des moyens tels que, si l'étape 20 est interrompue, une lecture ultérieure révélera les informations 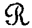 et d (et le cas échéant les informations associées au premier perfectionnement) soit toutes inchangées, soit toutes changées, conformément aux commandes de l'automate.

On évite ainsi certaines possibilités d'erreur, en faveur de l'acheteur ou de l'automate selon celle des opérations qui se serait opérée sans l'autre.

À titre d'exemple de réalisation (permettant de minimiser le nombre d'écritures en mémoire), la carte comporte deux zones de mémoire Z₀ et Z₁ contenant chacune 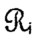 , le solde dᵢ, un numéro ni pouvant prendre la valeur 0 ou 1 et une somme de contrôle si portant sur dᵢ et nᵢ (sᵢ est normalement le nombre de bits à 0 dans dᵢ et nᵢ).

Préalablement à une lecture (en particulier à l'étape 05), la carte détermine laquelle des zone Z₀ ou Z₁ est valide, et à cette fin contrôle pour chacune des deux zones la validité de si relativement à di et ni. Si sᵢ est invalide, la carte ignore ou efface l'ensemble de la zone ; si, à l'issue de cette opération, une seule des deux zones est non ignorée ou effacée, alors cette zone est considérée comme valide ; si les deux zones sont non ignorées ou effacées la zone valide est donnée par la table suivante :

| n₀ | n₁ | zone valide |
|---|---|---|
| 0 | 0 | Z₁ |
| 1 | 0 | Z₀ |
| 1 | 1 | Z₁ |
| 0 | 1 | Z₀ |

Les valeurs retournées par la carte pour 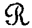 (à l'étape 10) et d (pris en compte pour le calcul du nouveau solde à l'étape 20) sont 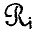 et dᵢ de la zone valide.

L'écriture (étapes 20 et 50) aura lieu dans l'autre zone (après effacement préalable), avec une valeur de nᵢ telle que la zone où aura lieu l'écriture devienne la zone valide, c'est à dire selon la table suivante :

| si zone valide | et | écriture en | et |
|---|---|---|---|
| Z₁ | n₁ = 0 | Z₀ | n₀ = 1 |
| Z₀ | n₀ = 1 | Z₁ | n₁ = 1 |
| Z₁ | n₁ = 1 | Z₀ | n₀ = 0 |
| Z₀ | n₀ = 0 | Z₁ | n₁ = 0 |

L'écriture dans cette zone se fera lors de l'étape 20 avec 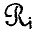 = 1, avant, ou simultanément avec, l'écriture de nᵢ, dᵢ et sᵢ ; à l'issue de cette écriture la zone valide a changé.

L'étape 50 écrit 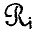 = 0 dans la zone valide.

L'écriture indivisible d'autres informations peut se traiter par extension des zones Zᵢ et des données prises en compte par les sommes de contrôle sᵢ.

Un *quatrième perfectionnement* consiste à soumettre des informations modifiant l'état de la carte, en particulier les commandes permettant de positionner l'indicateur de ratification à l'état 1, à la vérification préalable, par un dispositif intégré à la carte, de la validité d'un certificat cryptographique d'intégrité de message, produit dans l'automate par un moyen correspondant.

Un *cinquième perfectionnement* consiste, de façon symétrique du précédent, à soumettre des informations relatives à l'état de la carte, en particulier l'état de l'indicateur de ratification et/ou la confirmation de la prise en compte du débit, à la vérification préalable, par un dispositif intégré à l'automate, de la validité d'un certificat cryptographique d'intégrité de message, produit dans la carte par un moyen correspondant.

À titre d'exemple, le certificat cryptographique des quatrième et cinquième perfectionnements ci-dessus peut être une signature électronique de message obtenue et vérifiée selon la méthode de la norme ISO 9796-2, ou plus simplement selon un algorithme symétrique de type DES.

Un certain nombre d'autres perfectionnements visent à augmenter la difficulté, pour un utilisateur, d'interrompre sciemment la transaction.

Un *sixième perfectionnement* consiste ainsi à modifier l'étape 40 en remplaçant la délivrance pure et simple du bien par une décision d'opérer ou non cette délivrance après une temporisation. Pour améliorer la rapidité de ce système, on peut délivrer le bien avant expiration de la temporisation si l'automate a la confirmation de la bonne exécution de l'étape 50, au lieu d'attendre l'expiration de la temporisation. Ces précautions rendent infructueuses les éventuelles tentatives de l'acheteur d'empêcher l'étape 50 en interrompant la communication immédiatement après la délivrance.

Le séquencement est ainsi modifié (étant observé que les étapes 40 et 45 peuvent être inversées) :
40) l'automate lance une temporisation,
45) étape inchangée,
50) étape inchangée,
55) la carte acquitte l'exécution de l'étape 50 par émission d'un message spécifique (étape facultative, mais permettant d'écourter la durée moyenne de la transaction),
60) l'automate délivre le bien à l'expiration du temporisateur ou, le cas échéant, à la réception du message de l'étape 55, au premier des deux termes échus. L'utilisateur est ainsi privé du repère temporel qui lui permettrait d'interrompre la transaction à son profit.

Un *septième perfectionnement* consiste à protéger contre l'écoute les communications entre l'automate et la carte par un moyen tel qu'un chiffrement cryptographique, de sorte que cette écoute ne puisse révéler le moment où l'écriture à 0 du bit de ratification 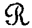 est commandée et exécutée. On rend ainsi plus difficile la détermination de l'instant où il serait avantageux d'interrompre la communication.

Un *huitième perfectionnement* consiste, en complément du sixième et/ou du septième perfectionnement précédent, à insérer dans la transaction une pause variant aléatoirement, toujours dans le but de rendre plus difficile la détermination de l'instant où il serait avantageux d'interrompre la communication. Cette pause à variation aléatoire est de préférence inséré dans une étape située avant le débit de la carte.

Un *neuvième perfectionnement* consiste à détecter une situation très vraisemblablement anormale, révélée par un trop grand nombre de transactions gratuites. À cet effet, un dispositif compteur adéquat compte les cas où à l'étape 05 la décision est prise de faire une délivrance sans paiement. On peut également totaliser les montants ainsi potentiellement perdus par les automates. Si ce compteur est intégré à l'automate, il aura des fins statistiques ; s'il est intégré à la carte, il est avantageux de subordonner la délivrance du bien ou du service à la confirmation de la bonne mise à jour du compteur dans le cas où l'acheteur échappe au débit, de sorte qu'il ne puisse, au moins, échapper à la mise à jour du compteur.

On peut prévoir un dispositif inhibant la délivrance du bien quand le compteur dépasse un seuil, ou bien une alarme ou signalisation analogue. On peut également prévoir un retour en arrière total ou partiel du compteur, par exemple à chaque transaction avec débit, ou avec un dispositif spécifique.

Un *dixième perfectionnement* consiste à enregistrer la nature du bien à délivrer, par exemple lors de l'étape 20, et à lire et utiliser cette information notamment quand, à l'issue de l'étape 05, la décision est prise d'effectuer une délivrance sans débit. Ceci permet de traiter la reprise de la transaction dans le cas d'automates capables de délivrer plusieurs types de bien, ou des montants différents, ou par exemple dans un système de transport avec des destinations différentes en fonction d'une sélection par l'usager.

## Revendications

1. Un procédé d'échange de données entre la mémoire non volatile d'un objet'portatif et un automate auquel l'objet portatif est couplé temporairement pour permettre la délivrance d'un bien ou d'un service, l'objet portatif comportant une information de valeur susceptible d'être débitée par l'automate en contrepartie de ladite délivrance du bien ou service,
procédé **caractérisé en ce qu'**il comprend des étapes dans lesquelles l'automate commande la modification d'un indicateur de ratification, conservé dans la mémoire non volatile de l'objet portatif, entre deux états, à savoir un état ratifié correspondant au cas où la précédente transaction opérée avec l'objet portatif, indifféremment avec ledit automate ou avec un autre, s'est déroulée correctement, et un état non ratifié dans le cas où cette précédente transaction a été interrompue en cours d'exécution,
et dans lequel l'automate, successivement :
- débite conditionnellement l'objet portatif, si l'indicateur est à l'état ratifié,
- commande le positionnement par l'objet portatif de l'indicateur à l'état non ratifié si un débit a été opéré à l'étape précédente,
- commande ensuite la délivrance du bien ou du service, et
- si le bien est effectivement délivré à l'étape précédente, commande le positionnement par l'objet portatif de l'indicateur à l'état ratifié.

2. Le procédé de la revendication 1, comprenant les étapes suivantes :
a) par l'automate, lecture de l'état de l'indicateur de ratification et saut à l'étape e) si celui-ci est à l'état non ratifié,
b) par l'automate, commande du débit de l'objet portatif d'un montant correspondant au bien ou service à délivrer,
c) par l'objet portatif, enregistrement du débit par mise à jour de l'information de valeur, et positionnement de l'indicateur à l'état non ratifié,
d) par l'objet portatif, confirmation à l'automate de l'enregistrement du débit,
e) par l'automate, délivrance du bien ou service,
f) par l'automate, commande du positionnement de l'indicateur à l'état ratifié, et
g) par l'objet portatif, modification de l'état de l'indicateur, pour le mettre à l'état ratifié.

3. Le procédé de l'une des revendications précédentes, dans lequel le débit conditionnel de l'objet portatif est subordonné en outre à l'écoulement d'un délai depuis la précédente opération de positionnement de l'indicateur à l'état non ratifié.

4. Le procédé de l'une des revendications précédentes, dans lequel le débit conditionnel de l'objet portatif est subordonné en outre à l'appartenance de l'automate exécutant la transaction courante à un groupe auquel appartient également l'automate ayant réalisé la transaction précédente.

5. Le procédé de l'une des revendications précédentes, dans lequel, lorsque l'indicateur est à l'état non ratifié, la délivrance sans débit est inhibée si l'automate détecte qu'une délivrance a eu lieu lors de la précédente utilisation de l'objet portatif.

6. Le procédé de l'une des revendications précédentes, dans lequel le débit de l'objet portatif et le positionnement de l'indicateur à l'état non ratifié sont opérés de manière indivisible.

7. Le procédé de l'une des revendications précédentes, dans lequel au moins une partie des informations modifiant l'état de l'objet portatif, notamment les commandes permettant de positionner l'indicateur à l'état ratifié, sont préalablement traitées par des moyens cryptographiques conjointement mis en oeuvre par l'objet portatif et l'automate.

8. Le procédé de l'une des revendications précédentes, dans lequel au moins une partie des informations relatives à l'état de l'objet portatif, en particulier l'état de l'indicateur et la confirmation de la prise en compte du débit, sont préalablement traitées par des moyens cryptographiques conjointement mis en oeuvre par l'objet portatif et l'automate.

9. Le procédé de l'une des revendications précédentes, dans lequel la délivrance du bien ou du service est opérée de manière différée après une temporisation donnée.

10. Le procédé de la revendication 9, dans lequel le bien est délivré avant l'expiration de la temporisation en cas de confirmation de la bonne exécution de l'étape de positionnement par l'objet portatif de l'indicateur à l'état ratifié.

11. Le procédé de la revendication 9, dans lequel il est inséré dans la transaction une pause de durée aléatoire.

12. Le procédé de l'une des revendications précédentes, dans lequel les informations échangées entre l'automate et l'objet portatif sont chiffrées d'une manière empêchant de révéler le moment où est commandé par l'automate, et réalisé par l'objet portatif, le positionnement de l'indicateur à l'état ratifié.

13. Le procédé de l'une des revendications précédentes, comprenant le comptage cumulatif, dans l'automate, des occurences de lecture d'un indicateur à l'état non ratifié.

14. Le procédé de l'une des revendications précédentes, comprenant le comptage cumulatif, dans l'objet portatif, des occurences de mémorisation de l'indicateur à l'état non ratifié entre deux transactions.

15. Le procédé de la revendication 13 ou 14, dans lequel il est prévu des moyens pour signaler le dépassement d'un seuil donné du comptage dans l'objet portatif, notamment des moyens pour inhiber la délivrance consécutive du bien ou du service.

16. Le procédé de l'une des revendications précédentes, dans lequel la mémoire de l'objet portatif comporte une information de nature du bien ou service à délivrer, information mise à jour avant délivrance éventuelle de ce bien ou service.

## Patentansprüche

1. Verfahren zum Austausch von Daten zwischen dem nichtflüchtigen Speicher eines tragbaren Objekts und einem Automaten, wobei das tragbare Objekt temporär gekoppelt ist, um die Lieferung einer Ware oder einer Dienstleistung zu gestatten, wobei das tragbare Objekt eine Wertinformation aufweist, die geeignet ist, im Gegenzug zu der Lieferung der Ware oder Dienstleistung debitiert zu werden,
wobei das Verfahren **dadurch gekennzeichnet ist, dass es** Schritte aufweist, bei welchen der Automat die Änderung eines Ratifizierungsindikators anweist, konserviert in dem nichtflüchtigen Speicher des tragbaren Objekts, zwischen zwei Zuständen, nämlich einem ratifizierten Zustand entsprechend dem Fall, bei welchem die vorhergehende Transaktion, die mit dem tragbaren Objekt durchgeführt wurde, egal ob mit dem Automaten oder einem anderen, korrekt abgelaufen ist, und einem nicht ratifizierten Zustand in dem Fall, in welchem diese vorhergehende Transaktion während der Ausführung unterbrochen worden ist,
und in welchem der Automat nacheinander:
- das tragbare Objekt bedingt debitiert, wenn der Indikator im ratifizierten Zustand ist,
- die Positionierung durch das tragbare Objekt des Indikators in den nicht ratifizierten Zustand anweist, wenn eine Debitierung in dem vorhergehenden Schritt durchgeführt worden ist,
- sodann die Lieferung der Ware oder der Dienstleistung anweist, und
- wenn die Ware tatsächlich in dem vorhergehenden Schritt geliefert worden ist, die Positionierung durch das tragbare Objekt des Indikators in den ratifizierten Zustand anweist.

2. Verfahren gemäß Anspruch 1, die folgenden Schritte aufweisend:
a) Lesen, durch den Automaten, des Zustands des Ratifizierungsindikators und Springen zum Schritt e), wenn dieser im nicht ratifiziertem Zustand ist,
b) Anweisen, durch den Automaten, der Debitierung des tragbaren Objekts mit einem Betrag entsprechend der zu liefernden Ware oder Dienstleistung,
c) Speichern, durch das tragbare Objekt, der Debitierung durch Aktualisieren der Wertinformation, und Positionieren des Indikators in den nicht ratifizierten Zustand,
d) Bestätigen, durch das tragbare Objekt, dem Automaten hinsichtlich der Speicherung der Debitierung,
e) Liefern, durch den Automaten, der Ware oder Dienstleistung,
f) Anweisen, durch den Automaten, der Positionierung des Indikators in den ratifizierten Zustand, und
g) Ändern, durch das tragbare Objekt, des Zustands des Indikators, um ihn in den ratifizierten Zustand zu setzen.

3. Verfahren gemäß einem der vorherigen Ansprüche, bei welchem die bedingte Debitierung des tragbaren Objekts des Weiteren dem Ablauf einer Verzögerung der vorherigen Positionierungs-Operation des Indikators in den nicht ratifizierten Zustand unterworfen ist.

4. Verfahren gemäß einem der vorherigen Ansprüche, bei welchem die bedingte Debitierung des tragbaren Objekts zusätzlich der Zugehörigkeit des Automaten, der die laufende Transaktion ausführt, zu einer Gruppe unterworfen ist, welcher ebenfalls der Automat, welcher die vorhergehende Transaktion realisiert hat, zugehörig ist.

5. Verfahren gemäß einem der vorherigen Ansprüche, bei welchem, während der Indikator in dem nicht ratifizierten Zustand ist, die Lieferung ohne Debitierung verhindert wird, wenn der Automat detektiert, dass eine Lieferung während der vorhergehenden Benutzung des tragbaren Objekts stattgefunden hat.

6. Verfahren gemäß einem der vorherigen Ansprüche, bei welchem die Debitierung des tragbaren Objekts und die Positionierung des Indikators in den nicht ratifizierten Zustand in unteilbarer Weise durchgeführt werden.

7. Verfahren gemäß einem der vorherigen Ansprüche, bei welchem zumindest ein Teil der Informationen, die den Zustand des tragbaren Objekts ändern, insbesondere die Anweisungen, welche es ermöglichen, den Indikator in den ratifizierten Zustand zu positionieren, zuvor durch kryptographische Mittel verarbeitet werden, die zusammen durch das tragbare Objekt und den Automaten eingesetzt werden.

8. Verfahren gemäß einem der vorherigen Ansprüche, bei welchem zumindest ein Teil der Informationen hinsichtlich des Zustands des tragbaren Objekts, insbesondere der Zustand des Indikators und die Bestätigung der Diskontierung der Debitierung, zuvor durch kryptographische Mittel verarbeitet werden, die gemeinsam durch das tragbare Objekt und den Automaten eingesetzt werden.

9. Verfahren gemäß einem der vorherigen Ansprüche, bei welchem die Lieferung der Ware oder der Dienstleistung zeitversetzt nach einer gegebenen Zeitgabe durchgeführt wird.

10. Verfahren gemäß Anspruch 9, bei welchem die Ware vor dem Ablauf der Zeitgabe geliefert wird im Fall der Bestätigung der guten Ausführung des Positionierungsschritts durch das tragbare Objekt des Indikators in den ratifizierten Zustand.

11. Verfahren gemäß Anspruch 9, bei welchem eine Pause von zufälliger Länge in die Transaktion eingefügt wird.

12. Verfahren gemäß einem der vorherigen Ansprüche, bei welchem die zwischen dem Automaten und dem tragbaren Objekt ausgetauschten Informationen verschlüsselt werden, um zu verhindern, dass der Moment offenbar wird, in welchem durch den Automaten die Positionierung des Indikators in den ratifizierten Zustand angewiesen wird und durch das tragbare Objekt realisiert wird.

13. Verfahren gemäß einem der vorherigen Ansprüche, aufweisend die kumulative Zählung, in dem Automaten, der Fälle des Lesens eines Indikators im nicht ratifizierten Zustand.

14. Verfahren gemäß einem der vorherigen Ansprüche, aufweisend das kumulative Zählen, in dem tragbaren Objekt, der Fälle der Speicherung des Indikators in dem nicht ratifizierten Zustand zwischen zwei Transaktionen.

15. Verfahren gemäß Anspruch 13 oder 14, bei welchem Mittel vorgesehen sind zum Signalisieren des Überschreitens einer Schwelle, gegeben durch das Zählen in dem tragbaren Objekt, insbesondere Mittel, um die nachfolgende Lieferung der Ware oder der Dienstleistung zu verhindern.

16. Verfahren gemäß einem der vorherigen Ansprüche, bei welchem der Speicher des tragbaren Objekts eine Information der Art der zu liefernden Ware oder Dienstleistung aufweist, wobei die Information vor der eventuellen Lieferung dieser Ware oder Dienstleistung aktualisiert wird.

## Claims

1. A method of interchanging data between the non-volatile memory of a portable object and an automatic machine with which the portable object is temporarily coupled to enable goods or service to be delivered, the portable object having value information that can be debited by the machine in consideration for delivering the goods or service,
the method being **characterized in that** it comprises steps in which the machine causes a ratification flag to be modified, which flag is stored in the non-volatile memory of the portable object, said flag having two states, a ratified state corresponding to the case in which the preceding transaction performed with the portable object, whether by the same machine or another machine, took place correctly, and a non-ratified state for the case in which said preceding transaction was interrupted while it was being executed,
and in which the machine successively:
· conditionally debits the portable object if the flag is in the ratified state;
· causes the portable object to put the flag into the non-ratified state if a debit took place during the preceding step;
· then causes the goods or service to be delivered; and
· if delivery takes place effectively in the preceding step, causes the portable object to put the flag into the ratified state.

2. The method of claim 1, comprising the following steps:
a) the machine reads the state of the ratification flag and jumps to step e) if it is in the non-ratified state;
b) the machine causes the portable object to be debited by an amount corresponding to the goods or service to be delivered;
c) the portable object records the debit by updating its value information, and it puts the flag into the non-ratified state;
d) the portable object confirms to the machine that the debit has been recorded;
e) the machine delivers the goods or service;
f) the machine causes the flag to be set to the ratified state; and
g) the portable object changes the state of the flag to put it into the ratified state.

3. The method of any preceding claim, in which conditional debiting of the portable object is also subordinate to a time delay elapsing since the preceding operation of putting the flag into the non-ratified state.

4. The method of any preceding claim, in which conditional debiting of the portable object is also subordinate to the machine performing the current transaction belonging to a group to which the machine that performed the preceding transaction also belongs.

5. The method of any preceding claim, in which, when the flag is in the non-ratified state, delivery without debit is inhibited if the machine detects that delivery took place during the preceding use of the portable object.

6. The method of any preceding claim, in which debiting the portable object and putting the flag into the non-ratified state are performed in indivisible manner.

7. The method of any preceding claim, in which at least a portion of the information modifying the state of the portable object, in particular commands enabling the flag to be put into the ratified state, is previously processed by cryptographic means implemented both in the portable object and in the machine.

8. The method according to any preceding claim, in which at least a portion of the information relating to the state of the portable object, in particular the state of the flag and confirmation that the debit has been taken into account, is previously processed by cryptographic means implemented both in the portable object and in the machine.

9. The method of any preceding claim, in which the goods or service is delivered in deferred manner after a given time delay.

10. The method of claim 9, in which delivery takes place prior to the expiry of the time delay in the event of receiving confirmation that the portable object has been successful in putting the flag into the ratified state.

11. The method of claim 9, in which a pause of random duration is included in the transaction.

12. The method of any preceding claim, in which the information interchanged between the machine and the portable object is enciphered in such a manner as to avoid revealing the moment at which the machine instructs the portable object to put the flag into the ratified state, or the moment at which the portable object performs that instruction.

13. The method of any preceding claim, including, in the machine, counting the number of occasions on which it reads a flag in the non-ratified state.

14. The method of any preceding claim, including the portable object counting the number of occasions on which it stores the flag in the non-ratified state between two transactions.

15. The method of claim 13 or 14, in which means are provided to indicate that a given threshold has been exceeded by the count in the portable object, in particular means for inhibiting subsequent delivery of goods or service.

16. The method of any preceding claim, in which the memory of the portable object includes information about the kind of goods or service to be delivered, which information is updated before any delivery of said goods or service.
